# EUROPEAN PATENT SPECIFICATION

(11) **EP 2 566 205 B1**
(45) Date of publication and mention of the grant of the patent: **13.03.2019**
(21) Application number: 11817717.9
(22) Date of filing: 13.06.2011
(51) Int. Cl.: H04W 12/04, H04W 36/00

(54) **NOTIFYING KEY METHOD FOR MULTI-SYSTEM CORE NETWORK AND MULTI-SYSTEM NETWORK**
BENACHRICHTIGUNGSSCHLÜSSELVERFAHREN FÜR EIN NETZWERK MIT MEHREREN SYSTEMKERNEN UND NETZWERK AUS MEHREREN SYSTEMEN
PROCÉDÉ DE NOTIFICATION DE CLÉ POUR C UR DE RÉSEAU MULTISYSTÈME ET RÉSEAU MULTISYSTÈME

(30) Priority: 17.08.2010 CN 201010258914
(43) Date of publication of application: 06.03.2013
(73) Proprietor: ZTE Corporation, Shenzhen, Guangdong 518057 (CN)
(72) Inventor: LIU, Fulei, Shenzhen Guangdong 518057 (CN); DOU, Jianwu, Shenzhen Guangdong 518057 (CN); DONG, Xiaohu, Shenzhen Guangdong 518057 (CN)
(74) Representative: Manitz Finsterwald Patentanwälte PartmbB
(86) International application number: PCT/CN2011/075636
(87) International publication number: WO 2012/022190

(56) References cited:
- CN-A- 1 705 261
- CN-A- 101 364 865
- SIEMENS ATEA1: "Interoperation between UMTS and GSM", 3GPP DRAFT; S3-99158, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG2, no. Visby; 19990719, 5 January 2000 (2000-01-05), XP050403604, [retrieved on 2000-01-05]
- T-MOBIL ET AL: "An Analysis of Possible Handover Mechanisms between GSM and UMTS", 3GPP DRAFT; S3-99271_T3-99234_ INTEROPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Bonn; 19990927, 27 September 1999 (1999-09-27), XP050267901, [retrieved on 1999-09-27]
- ERICSSON: "A Possible Handover Mechanism between GSM and UMTS", 3GPP DRAFT; S3-99267_INTEROPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Bonn; 19990927, 27 September 1999 (1999-09-27), XP050267897, [retrieved on 1999-09-27]
- "3rd Generation Partnership Project;Technical Specification Group Services and System Aspects; 3G Security;Security architecture(Release 9)", 3GPP DRAFT; 33102-920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, 31 March 2010 (2010-03-31), XP050435341, [retrieved on 2010-03-31]

## Description

### Technical Field

The present invention relates to mobile communication technology, and particularly, to a method for notifying a key from a multi-system core network and a multi-system network. The features of the preamble of the independent claims are known from SIEMENS ATEA1: "Interoperation between UMTS and GSM", 3GPP DRAFT; S3-99158, MOBILE COMPETENCE CENTRE. Related technologies are also known from T-MOBIL ET AL: "An Analysis of Possible Handover Mechanisms between GSM and UMTS", 3GPP DRAFT; S3-99271_T3-99234_INTEROPERATION, MOBILE COMPETENCE CENTRE and ERICSSON: "A Possible Handover Mechanism between GSM and UMTS", 3GPP DRAFT; S3-99267_INTEROPERATION, MOBILE COMPETENCE CENTRE.

### Background of the Related Art

Currently, authentication and encryption of a Universal Mobile Telecommunications System (UMTS) and Global System for Mobile Communications (GSM) defined in the 3GPP protocol are both carried out independently and separately. Wherein, the authentication of the UMTS is completed between a Universal Subscriber Identity Module (USIM), Visiting Location Register (VLR)/Serving GPRS Support Node (SGSN), and Home Location Register (HLR)/Authentication Center (AuC). The used authentication quintuplet is: Random challenge (RAND)/Expected Response (XRES)/Ciphering Key (CK)/Integrity Key (IK)/Authentication Token (AUTN). After the authentication is passed, with regard to a Circuit Switch (CS) domain, the VLR sends the CK and IK to an RNC, and the RNC and USIM complete the encryption; with regard to a Packet Switch (PS) domain, the SGSN and USIM complete the encryption. The authentication of the GSM is completed between a Subscriber Identity Module (SIM), VLR/SGSN, and HLR/AuC. The used authentication triplet is: Random challenge (RAND)/Signed Response (SRES)/Cipher Key (Kc). After the SIM and VLR/SGSN complete the authentication, with regard to the CS domain, the VLR sends the key Kc to a BSC, and the BSC and SIM complete the encryption; with regard to the PS domain, the SGSN and SIM complete the encryption.

The R99+HLR/ AuC and R99+VLR/SGSN also have a function of converting the keys CK/IK and Kc according to different radio access systems such as a UMTS Terrestrial Radio Access Networks (UTRAN) or a Base Station System (BSS).

It can be seen from the above process that, according to the radio access network UTRAN or BSS, the VLR/SGSN will send a key directly generated by the HLR/AuC or a key converted according to the radio access network by the VLR/SGSN self. For example, when the USIM accesses through the UTRAN, the VLR will send the keys CK and IK directly generated by the HLR/AuC to the UTRAN; and when the USIM accesses through the GSM BSS, the VLR will convert the keys CK and IK generated by the HLR/AuC into the Kc to send to the BSS. Conversely, when the SIM accesses through the UTRAN, the VLR will convert the Kc generated by the HLR/AuC into the CK and IK to send to the UTRAN. Therefore, when a mobile subscriber performs cross-system handover, such as a handover from the UMTS to GSM (vice versa), if the two systems both adopt the encryption but the ciphering keys are different, with regard to a CS domain voice service, the service could not be continued until the radio side RNC or BSC obtains keys from the VLR.

### Summary of the Invention

The object of the present invention is to provide a method for a multi-system core network notifying a key to a multi-system radio access network, and a multi-system network, so as to acquire a key of the target system in the condition of no participation of the core network.

In order to solve the above technical problem, the present invention provides a method for a multi-system core network notifying a key to a multi-system radio access network, as defined in the independent method claim 1, and a multi-system network as defined in the independent multi-system network claim 5.

In the present invention, when sending the key to the multi-system radio access network, the multi-system core network sends the key indication information of the key at the same time, which makes the multi-system radio access network perform key conversion according to a key status, so as to obtain the key of the target system in the condition of without being perceived by the core network when the user equipment performs multi-system handover, thereby accelerating the handover speed and shortening the interruption time of user plane data of the user equipment.

### Brief Description of Drawings

FIG. 1 is a schematic diagram of method for a multi-system core network notifying a key to a multi-system radio access network according to the present invention.
FIG. 2 is a connection diagram of network elements of a multi-system network.
FIG. 3 is a flow diagram of CS domain authentication and encryption of a UTRAN user according to the example 1.
FIG. 4 is a flow diagram of CS domain authentication and encryption of a GSM user according to the example 2.

### Preferred Embodiments of the Present Invention

Since ciphering keys of a UMTS system and GSM system are different, in the related art, when a user equipment performs multi-system handover, radio access networks UTRAN/BSS need to interact with a VLR to obtain the ciphering keys of their own systems. In order to shorten the interruption time of user plane data, in the present invention, the radio access networks UTRAN/BSS convert and exchange key information voluntarily, which try to make a core network imperceptive. Due to non-self-completeness of conversion algorithms c3, c4 and c5 for the CK/IK and Kc, the RNC/BSC of the radio access networks needs to know whether the key sent by the VLR to the RNC/BSC self is generated directly by HLR/AuC or converted by the VLR, and the radio side can only convert the directly generated key value voluntarily.

Furthermore, in the present invention, with respect to the problem that whether the key is generated directly by the HLR/AuC or converted by the VLR can not be known when the radio access network RNC or BSC obtains the key from the VLR, the solution is: a multi-system core network notifying a status of the key to the radio access network when sending the key.

The main idea of the method for the multi-system core network notifying the key to the multi-system radio access network and multi-system network in the present invention is: when the multi-system core network sends the key to the multi-system radio access network, sending key indication information of the key at the same time, which makes the multi-system radio access network perform key conversion according to a key status, so as to obtain the key of the target system in the condition of without being perceived by the core network when the user equipment performs multi-system handover, thereby accelerating the handover speed and shortening the interruption time of user plane data of the user equipment.

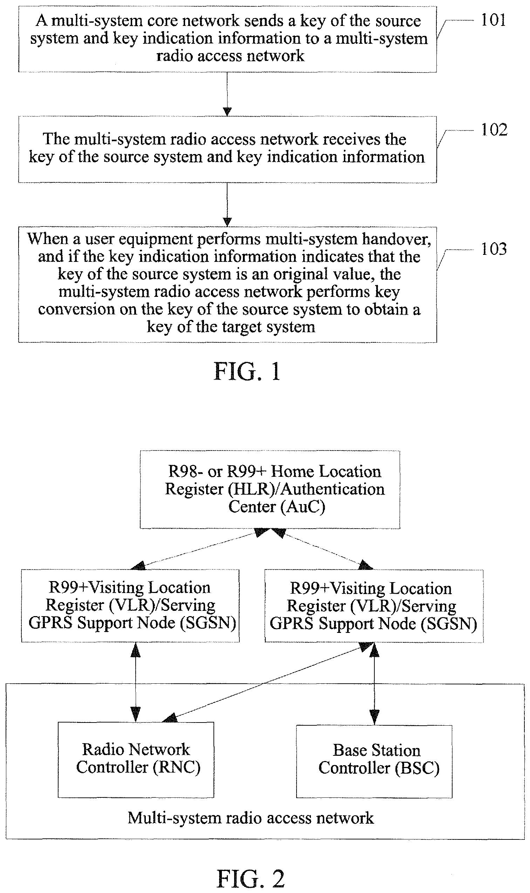

As shown in FIG. 1, the method for the multi-system core network notifying the key to the multi-system radio access network includes following steps.

In step 101, the multi-system core network sends a key of the source system and key indication information to the multi-system radio access network.

The multi-system handover mentioned in the present invention refers to a handover between a 2G system and 3G system. The 3G system refers to a Universal Mobile Telecommunications System (UMTS) or a Time Division-Synchronous Code Division Multiple Access (TD-SCDMA) system, and the 2G system refers to a Global System for Mobile Communications (GSM).

When the multi-system core network sends the key of the UMTS or TD-SCDMA system, the key indication information is embodied in a form of information element in Integrity Protection Information and/or Encryption Information; when the multi-system core network sends the key of the GSM, the key indication information is embodied in a form of information element in the Encryption Information and Kc₁₂₈.

The specific technical scheme is described as follows.

When the USIM/SIM completes the authentication with the HLR/AuC and MSC/VLR, the MSC/VLR will send a ciphering key to an RNC or a BSC, and carry the information element indicating a key status when sending the key. An improvement of the structure of the encryption message in the existing 3GPP protocol is described as follows.

### (1) Improvement of the structure of the encryption message in UMTS system (with reference to 3GPP TS25.413)

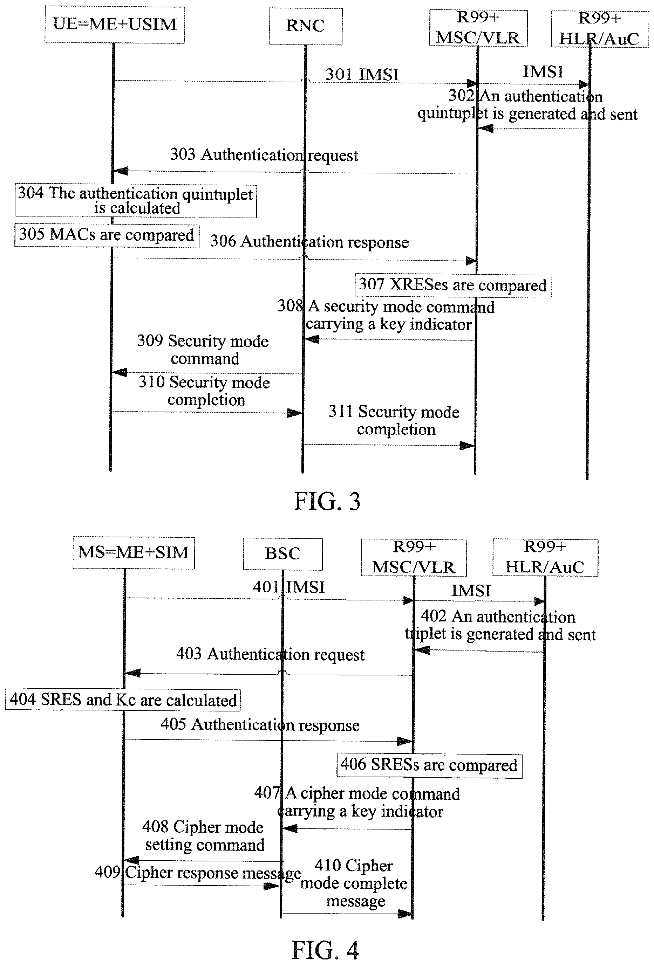

A key indication information element Key indicator is added in the Integrity Protection Information and Encryption Information to indicate whether the key is an original value or a value calculated by the MSC/VLR, which is specifically described as follows (with reference to FIG. 3).

### SECURITY MODE COMMAND

| IE/Group Name | Presence | Range |
|---|---|---|
| Message Type | M | |
| Integrity Protection Information | M | |
| Encryption Information | O | |
| Key Status | M | |

### Integrity Protection Information

| IE/Group Name | Presence | Range | IE type and reference |
|---|---|---|---|
| Integrity Protection Information | | | |
| > Permitted Integrity Protection Algorithms | | | |
| >> Integrity Protection Algorithm | M | 1 to 16 | INTEGER (standard UIA1 (0), standard UIA2 (1)) |
| > Integrity Protection Key | M | | BIT STRING (128) |
| >> Key indicator | O | 0 to 1 | INTEGER (original (0), calculated (1)) |

### Encryption Information

| IE/Group Name | Presence | Range | IE type and reference |
|---|---|---|---|
| Encryption Information | | | |
| > Permitted Encryption Algorithms | | | |
| >> Encryption Algorithm | M | 1 to 16 | INTEGER (no encryption (0), standard UEA1 (1), standard UEA 2 (2)) |
| > Encryption Key | M | | Bit string (128) |
| >> Key indicator | O | 0 to 1 | INTEGER (original (0), calculated (1)) |

### (2) Improvement of the structure of the encryption message in GSM system (with reference to 3GPP TS48.008)

The information element Key indicator indicating the key status is carried in the Encryption Information and Kc₁₂₈ to indicate whether the key is an original value or is calculated from the MSC/VLR, which is specifically described as follows (with reference to FIG. 4).

### CIPHER MODE COMMAND

| INFORMATION ELEMENT | REFERENCE | DIRECTION | TYPE | LEN |
|---|---|---|---|---|
| Message Type | 3.2.2.1 | MSC-BSS | M | 1 |
| Layer 3 Header Information | 3.2.2.9 | MSC-BSS | O | 4 |
| Encryption Information | 3.2.2.10 | MSC-BSS | M | 3-n |
| Cipher Response Mode | 3.2.2.34 | MSC-BSS | O | 2 |
| Kc₁₂₈ | 3.2.2.109 | MSC-BSS | C | 17 |

### Encryption Information

Existing protocol defined structure:

| 8 | 7 | 6 | 5 | 4 | 3 | 2 | 1 | |
|---|---|---|---|---|---|---|---|---|
| Element identifier | | | | | | | | octets 1 |
| Length | | | | | | | | octets 2 |
| Permitted algorithms | | | | | | | | octets 3 |
| Key | | | | | | | | octets 4-n |

Note: the length of key is 8 octets.

Modified structure:

| 8 | 7 | 6 | 5 | 4 | 3 | 2 | 1 | |
|---|---|---|---|---|---|---|---|---|
| Element identifier | | | | | | | | octet 1 |
| Length | | | | | | | | octet 2 |
| Permitted algorithms | | | | | | | | octet 3 |
| Key | | | | | | | | octet 4-11 |
| Key indicator | | | | | | | | octet 12 |

### Kc₁₂₈

Existing protocol defined structure:

| 8 | 7 | 6 | 5 | 4 | 3 | 2 | 1 | |
|---|---|---|---|---|---|---|---|---|
| Element identifier | | | | | | | | octet 1 |
| Kc₁₂₈ | | | | | | | | octet 2-17 |

Modified structure:

| 8 | 7 | 6 | 5 | 4 | 3 | 2 | 1 | |
|---|---|---|---|---|---|---|---|---|
| Element identifier | | | | | | | | octet 1 |
| Kc₁₂₈ | | | | | | | | octet 2-17 |
| Key indicator | | | | | | | | octet 18 |

In step 102, the multi-system radio access network receives the key of the source system and key indication information.

The multi-system radio access network can use a single-mode form (in mutual independence), and also can be a multi-mode form (e.g. the RNC of the UMTS and the BSC of the GSM are in a common mode, which is equivalent to one network element) as shown in FIG. 2.

The Radio Network Controller (RNC) and Base Station Controller (BSC) can be connected to the same R99+ VLR/SGSN (Note: the R98- VLR/SGSN does not supports the RNC) or two different R99+ VLR/SGSNs, and use the same R98-HLR/AuC or R99+HLR/AuC as shown in FIG. 2.

Wherein, R99 and R98 are release numbers of different protocol versions.

The present invention only relates to the improvement of the security encryption message between the MSC/VLR and RNC/BSC in a CS domain, but does not relate to a PS domain.

In step 103, when a user equipment performs multi-system handover, and if the key indication information indicates that the key of the source system is an original value, the multi-system radio access network performs key conversion on the key of the source system to obtain a key of the target system.

In the following two scenarios, the key of the source system sent by the multi-system core network to the multi-system radio access network is the directly generated original value.

Scenario 1: the user equipment uses a Universal Subscriber Identity Module (USIM) to access the UMTS or TD-SCDMA system initially, and the key sent by the multi-system core network is a Ciphering Key (CK) and an Integrity Key (IK).

After the scenario 1 occurs, when the user equipment performs handover from the UMTS or TD-SCDMA system to the GSM, the multi-system radio access network converts the CK and IK into a Cipher Key (Kc).

Scenario 2: the user equipment uses a Subscriber Identity Module (SIM) to access the GSM system initially, and the key sent by the multi-system core network is the Kc.

After the scenario 2 occurs, when the user equipment performs handover from the GSM system to the USIM or TD-SCDMA system, the multi-system radio access network converts the Kc into the CK and IK.

On the contrary, when the user equipment uses the Universal Subscriber Identity Module (USIM) to access the GSM system initially, or when the user equipment uses the Subscriber Identity Module (SIM) to access the Universal Mobile Telecommunications System (UMTS) or Time Division-Synchronous Code Division Multiple Access (TD-SCDMA) system initially, the key sent by the multi-system core network to the multi-system radio access network is a non original value, which is converted by the core network, namely a calculated value, and in this condition, the multi-system radio access network could not obtain the key of the target system through a direct conversion, but needs to interact with the core network to obtain the key.

The multi-system radio access network includes two logical functions: Radio Network Controller (RNC) and Base Station Controller (BSC). During the handover to the GSM system, the RNC completes the conversion from the CK and IK to the Kc and sends the Kc to the BSC; and during the handover to the UMTS or TD-SCDMA system, the BSC completes the conversion from the Kc to the CK and IK and sends the CK and IK to the RNC, which are specifically:
an RNC newly added module completing the conversion from the CK and IK to the Kc:
   c3: Kc[GSM]=CK1 xor CK2 xor IK1 xor IK2,
      wherein, both CKi and IKi are 64 bits, CK=CK1 ∥ CK2 and IK=IK1 ∥ IK2
a BSC newly added module completing the conversion from the Kc to the CK and IK:
   c4: CK[UMTS]=Kc ∥ Kc;
   c5: IK[UMTS]=Kc1 xor Kc2 ∥ Kc ∥ Kc1 xor Kc2;
      in c5, Kci is 32 bits and Kc=Kc1 ∥ Kc2

It can be proved that the algorithms c3, c4 and c5 have non-self-completeness, that is:
the Kc1 is obtained from the CK1 and IK1 through the algorithm c3; the CK2 and IK2 are obtained by plugging the Kc1 into the algorithms c4 and c5, thereby obtaining: CK1 CK2; IK1 IK2. Therefore, the radio access network can only convert a directly generated key value voluntarily.

In the method of the present invention, an indication is added in the security encryption message to indicate whether the key is generated directly or from the conversion. If the key is generated directly, when a USIM user in the multi-system (i.e. the user equipment using the USIM) performs handover from the UMTS or TD-SCDMA system to the GSM, the RNC can convert the CK and IK into the Kc voluntarily and directly and send to the BSC, but do not need to go through the signaling interaction with the core network so that the VLR will send the Kc to the BSC. Therefore, during the handover of the user plane data, the speed can be accelerated and the data interruption time can be shortened, and it may be not perceived by the core network at the same time. The method is also applied to that an SIM user performs handover from the GSM system to the UMTS or TD-SCDMA system in the multi-system.

### Example 1

As shown in FIG. 3, an authentication and encryption flow of a USIM user includes following steps.

In step 301, a USIM sends an International Mobile Subscriber Identity (IMSI) to HLR/AuC through MSC/VLR.

In step 302, the HLR/AuC generates an authentication quintuplet to send to the MSC/VLR.

The authentication quintuplet is: Random challenge (RAND), Expected Response (XRES), CK, IK and Authentication Token (AUTN).

In step 303, the MSC/VLR sends an Authentication request to the USIM, wherein the RAND and AUTN are carried in the request, and the AUTN includes: a Sequence number (SQN), an Anonymity Key (AK), an Authentication management field (AMF) and a Message Authentication Code (MAC).

In step 304, the USIM calculates the quintuplet: RAND, XRES, CK, IK and AUTN according to a K (an authentication Key, wherein one IMSI corresponds to one K uniquely) and the RAND.

In step 305, the USIM compares the MAC calculated by the USIM itself with the MAC sent from the MSC/VLR.

In step 306, if the two are equal, the USIM sends an Authentication Response carrying the XRES calculated by the USIM itself to the MSC/VLR.

In step 307, the MSC/VLR compares the XRES transmitted from the HLR/AuC with the XRES sent from the USIM.

In step 308, if the two are equal, the MSC/VLR send a Security mode command to an RNC, carry a key indication information element namely a Key indicator of an Integrity Protection Key in Integrity Protection Information, and carry a key indication information element namely a Key indicator of a Ciphering Key in Encryption Information.

If the Integrity Protection Key and Ciphering Key are an original value (original), the key indicator is set as "0"; and if the Integrity Protection Key and Ciphering Key are a calculated value (calculated), the key indicator is set as "1".

In step 309, the RNC sends the Security mode command to a UE, and indicates to use the CK and IK to perform encryption.

If the Key indicator is "0", then if the UE performs handover to a GSM system subsequently, the RNC uses an algorithm c3 to obtain a Kc, and then transmits the Kc to a BSC directly through an Iur-g interface, so as to omit the interaction with the VLR; if the Key indicator is "1", the RNC can not use the algorithm c3, and must convert the Kc through the VLR.

In step 310, the UE replies Security mode complete to the RNC to indicate that the encryption of radio side is completed.

In step 311, the RNC replies a Security mode complete message to the MSC/VLR to indicate that the encryption is completed.

In order to further improve the above example 1, in the step 308, when the Key indicator sent by the VLR to the RNC is "1", an initial Kc also can be sent to the RNC in the Security mode command. Therefore, when a user performs handover from the RNC to the BSC, even though the RNC can not use the algorithm c3 to obtain the Kc, the Kc sent from the VLR can be transmitted to the BSC directly through the Iur-g interface, so as to omit a second interaction with the VLR subsequently.

In the above step 308, both the Integrity Protection Information and Encryption Information carry the key indication information element. Since the status of the Integrity Protection Key and Ciphering Key are consistent when sent by the core network, alternatively, when key indication information is carried in the Integrity Protection Information or Encryption Information alternately, the RNC also can identify whether the Integrity Protection Key and Ciphering Key are the original value.

### Example 2

As shown in FIG. 4, an authentication and encryption flow of an SIM user includes following steps.

In step 401, an SIM sends an IMSI to HLR/AuC through MSC/VLR.

In step 402, the HLR/AuC generates an authentication triplet to send to the MSC/VLR.

The authentication triplet is: RAND, SRES and Kc.

In step 403, the MSC/VLR sends an Authentication request carrying the RAND to the SIM.

In step 404, the SIM calculates the SRES and Kc according to a K (an authentication Key, wherein one IMSI corresponds to one K uniquely) and the RAND.

In step 405, the SIM sends an Authentication response to the MSC/VLR, wherein the SRES calculated by the SIM itself is carried.

In step 406, the MSC/VLR compares the SRES transmitted from the HLR/AuC with the SRES sent from the SIM.

In step 407, if the two are equal, the MSC/VLR sends a Cipher mode command to a BSC, carries an indication information element Key indicator for a Key status in Encryption Information, and also carries the indication information element Key indicator for the Key status in Kc₁₂₈. When the Key indicator is "0", it represents an original value (original), and when the Key indicator is "1", it represents a calculated value (calculated).

In step 408, the BSC sends a Cipher mode setting command to a UE to indicate to use the Kc to perform encryption.

If the Key indicator is "0", then if the UE performs handover to a UTRAN subsequently, the BSC can use algorithms c4 and c5 to obtain a CK and IK, and then transmits the CK and IK to an RNC directly through an Iur-g interface, so as to omit the interaction with the VLR; if the Key indicator is "1", the BSC can not use the algorithms c4 and c5, and must convert the CK and IK through the VLR.

In step 409, the UE replies a Cipher response to the BSC to indicate that the encryption of radio side is completed.

In step 410, the BSC replies a Cipher mode complete message to the MSC/VLR to indicate that the encryption is completed.

In order to improve the example 2, in the step 407, when the Key indicator sent by the VLR to the BSC is "1", an initial CK and an initial IK also can be sent to the BSC in the Cipher mode command. Therefore, when a user performs handover from the BSC to the RNC, even though the BSC can not use the algorithms c4 and c5 to obtain the CK and IK, the CK and IK sent from the VLR can be transmitted to the RNC directly through the Iur-g interface, so as to omit a second interaction with the VLR subsequently.

In order to implement the above method, the present invention also provides a multi-system network, which includes:
a multi-system core network, configured to: send a key of a source system and key indication information to a multi-system radio network side; and
a multi-system radio access network, configured to: receive the key of the source system and key indication information; and, when a user equipment performs multi-system handover, if the key indication information indicates that the key of the source system is an original value generated by the multi-system core network, perform key conversion on the key of the source system to obtain a key of a target system.

The key of the source system sent by the multi-system core network can be a Ciphering Key (CK) and an Integrity Key (IK), and the key indication information indicates that the CK and IK are the original value; when the user equipment performs handover from a Universal Mobile Telecommunications System (UMTS) or a Time Division-Synchronous Code Division Multiple Access (TD-SCDMA) system to a Global System for Mobile Communications (GSM), the multi-system radio access network converts the CK and IK into a Cipher Key (Kc); or,
the key of the source system sent by the multi-system core network can be the Kc, the key indication information indicates that the Kc is the original value, and when the user equipment performs handover from the GSM to the UMTS or TD-SCDMA system, the multi-system radio access network converts the Kc into the CK and IK.

The multi-system radio access network includes a Radio Network Controller (RNC) and a Base Station Controller (BSC), both the RNC and BSC include a receiving module, a conversion module and a forwarding module; wherein:
in the RNC, the receiving module receives the CK and IK, and key indication information sent by the multi-system core network or BSC; when the key indication information indicates that the CK and IK are the original value, the conversion module converts the CK and IK into the Kc during the multi-system handover; and the forwarding module sends the Kc converted by the conversion module to the BSC;
in the BSC, the receiving module receives the Kc and key indication information sent by the multi-system core network or RNC; when the key indication information indicates that the Kc is the original value, the conversion module converts the Kc into the CK and IK during the multi-system handover; and the forwarding module forwards the CK and IK converted by the conversion module to the RNC.

Furthermore, when the key of the source system is a calculated value, the multi-system core network is further configured to send an original value key of the target system to the multi-system radio access network while sending the key of the source system.

Specifically, when the Kc sent by the multi-system core network to the BSC is the calculated value, original values of the CK and IK are also sent to the BSC at the same time; the receiving module of the BSC is further configured to: receive the original values of the CK and IK sent by the core network; and the forwarding module of the BSC is further configured to: when the key indication information indicates that the Kc is the calculated value, forward the original values of the CK and IK to the RNC during the multi-system handover.

When the CK and IK sent by the multi-system core network to the RNC are the calculated value, an original value of the Kc is also sent to the RNC at the same time; the receiving module of the RNC is further configured to: receive the original value of the Kc sent by the core network; and the forwarding module of the RNC is further configured to: when the key indication information indicates that the CK and IK are the calculated value, forward the original value of the Kc to the BSC during the multi-system handover.

When the multi-system core network sends the key of the UMTS or TD-SCDMA system, the key indication information is embodied in a form of information element in Integrity Protection Information and/or Encryption Information; when the multi-system core network sends the key of the GSM, the key indication information is embodied in a form of information element in the Encryption Information and Kc₁₂₈.

The multi-system radio access network is in a single-mode form or a multi-mode form.

The present invention is applied to the handover after the initial access of CS domain service. If the handover is performed back to the original system after the previous handover, the core network is still not required to participate, and the radio access network performs the encryption according to the cached key.

The idea of solving the technical problem in the present invention is: in the condition of no participation of the core network, the radio access network obtaining the key of the target system voluntarily. Therefore, convertibly, in the condition that the key is the original value, a source system radio access network can send the original value of key to a target system radio access network, and the target system radio access network completes the key conversion.

The ordinary person skilled in the art should understand that, with regard to the present invention, modifications, transformations or equivalent substitutions can be made within the scope of the present invention as defined in the claims, and all these modifications, transformations and equivalent substitutions should be covered within the scope of the present invention.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The advantage of using the technical scheme of the present invention is: in the condition of no participation of the core network, the radio access network obtaining the key of the target system voluntarily, which shortens the interruption time of user plane data stream, enhances the experience of users on voice services, achieves that the core network is imperceptive in certain scenarios, and reduces the process and time of signaling interaction between the radio access network (RNC/BSC) and core network (VLR) for obtaining ciphering keys, and especially when the RNC and BSC are connected to two different VLRs, the improvement is particularly significant.

### Industrial Applicability

Compared with the related art, in the present invention, when sending the key to the multi-system radio access network, the multi-system core network sends key indication information of the key at the same time, which makes the multi-system radio access network perform key conversion according to a key status so as to obtain the key of the target system in the condition of being not perceived by the core network when the user equipment performs multi-system handover, thereby accelerating the handover speed and shortening the interruption time of user plane data of the user equipment.

## Claims

1. A method for a multi-system core network notifying a key to a multi-system radio access network when a user equipment performs a multi-system handover between a Universal Mobile Telecommunications System, UMTS, or a Time Division-Synchronous Code Division Multiple Access, TD-SCDMA, system and a Global System for Mobile Communications, GSM, the method **characterized by** comprising:
an MSC/VLR of the multi-system core network sending (101) a key of a source system and key indication information to a Radio Network Controller, RNC, or a Base Station Controller, BSC, of the multi-system radio access network;
the RNC or the BSC of the multi-system radio access network receiving (102) the key of the source system and the key indication information; and
if the key indication information indicates that the key of the source system is an original value directly generated by an HLR/AuC, the RNC or the BSC of the multi-system radio access network performing (103) a key conversion on the key of the source system to obtain a key of a target system,
wherein
when the user equipment performs handover from the UMTS or the TD-SCDMA system to the GSM, the key of the source system sent by the MSC/VLR of the multi-system core network is a Ciphering Key, CK, and an Integrity Key, IK, and if the key indication information indicates that the CK and IK are the original value, the RNC of the multi-system radio access network converting the CK and IK into a Cipher Key, Kc, and sending the Kc to the BSC;
or
when the user equipment performs handover from the GSM to the UMTS or the TD-SCDMA system, the key of the source system sent by the MSC/VLR of the multi-system core network is the Kc, and if the key indication information indicates that the Kc is the original value, the BSC of the multi-system radio access network converting the Kc into the CK and IK and sending the CK and IK to the RNC.

2. The method according to claim 1, further comprising:
when the key indication information indicates that the CK and IK are a calculated value converted by the MSC/VLR, the RNC sending the Kc converted by the MSC/VLR to the BSC; and
when the key indication information indicates that the Kc is a calculated value converted by the MSC/VLR, the BSC sending the CK and IK converted by the MSC/VLR to the RNC.

3. The method according to claim 1, wherein
when the MSC/VLR of the multi-system core network sending the CK and IK and the key indication information to the RNC of the multi-system radio access network, the key indication information is embodied in a form of information element in integrity protection information and/or encryption information; and
when the MSC/VLR of the multi-system core network sending the Kc and the key indication information to the BSC of the multi-system radio access network, the key indication information is embodied in a form of information element in encryption information and Kc₁₂₈.

4. The method according to claim 1, wherein the multi-system radio access network is in a single-mode form or a multi-mode form.

5. A multi-system network, comprising:
a multi-system core network comprising an MSC/VLR and an HLR/AuC; and
a multi-system radio access network comprising a Radio Network Controller, RNC, and a Base Station Controller, BSC,
wherein when a user equipment performs a multi-system handover between a Universal Mobile Telecommunications System, UMTS, or a Time Division-Synchronous Code Division Multiple Access, TD-SCDMA, system and a Global System for Mobile Communications, GSM,
**characterized in that**
the MSC/VLR of the multi-system core network is configured to send a key of a source system and key indication information to the RNC or BSC of the multi-system radio access network;
the RNC or BSC of the multi-system radio access network is configured to receive the key of the source system and the key indication information, and if the key indication information indicates that the key of the source system is an original value directly generated by the HLR/AuC of the multi-system core network, perform a key conversion on the key of the source system to obtain a key of the target system,
wherein both the RNC and the BSC comprise a receiving module, a conversion module and a forwarding module,
when the user equipment performs a handover from the UMTS or the TD-SCDMA system to the GSM, the key of the source system sent by the MSC/VLR of the multi-system core network is a Ciphering Key, CK, and an Integrity Key, IK, and the receiving module of the RNC is configured to receive the CK and the IK, the conversion module of the RNC is configured to, if the key indication information indicates that the CK and IK are the original value, convert the CK and IK into a Cipher Key, Kc, and the forwarding module of the RNC is configured to send the Kc to the receiving module of the BSC;
or
when the user equipment performs a handover from the GSM to the UMTS or the TD-SCDMA system, the key of the source system sent by the MSC/VLR of the multi-system core network is the Kc, and the receiving module of the BSC is configured to receive the Kc; the conversion module of the BSC is configured to, if the key indication information indicates that the Kc is the original value, convert the Kc into the CK and IK, and the forwarding module of the BSC is configured to send the CK and IK to the receiving module of the RNC.

6. The multi-system network according to claim 5, wherein
the RNC is configured to send the Kc converted by the MSC/VLR to the BSC if the key indication information indicates that the CK and IK is a calculated value converted by the MSC/VLR; and
the BSC is configured to send the CK and IK converted by the MSC/VLR to the RNC if the key indication information indicates that the Kc is a calculated value converted by the MSC/VLR.

7. The multi-system network according to claim 5, wherein
when the CK and IK and the key indication information are sent to the RNC of the multi-system radio access network, the key indication information is embodied in a form of information element in integrity protection information and/or encryption information; or
when the Kc and the key indication information are sent to the BSC of the multi-system radio access network, the key indication information is embodied in a form of information element in the encryption information and Kc₁₂₈.

8. The multi-system network according to claim 5, wherein the multi-system radio access network is in a single-mode form or a multi-mode form.

## Patentansprüche

1. Verfahren für ein Multisystem-Kernnetzwerk zum Bekanntgeben eines Schlüssels für ein Multisystem-Funkzugriffsnetzwerk, wenn ein Nutzergerät eine Multisystem-Übergabe zwischen einem Universalen Mobilen Telekommunikationssystem, UMTS, oder einem Time Division-Synchronous Code Division Multiple Access System, TD-SCDMA-System, und einem globalen System für Mobilkommunikationen, GSM, ausführt, wobei das Verfahren **dadurch gekennzeichnet ist, dass** es umfasst, dass:
ein MSC/VLR des Multisystem-Kernnetzwerks einen Schlüssel eines Quellensystems und Schlüsselanzeigeinformationen an einen Funknetzwerkscontroller, RNC, oder einen Basisstationscontroller, BSC, des Multisystem-Funkzugriffsnetzwerks sendet (101);
der RNC oder der BSC des Multisystem-Funkzugriffsnetzwerks den Schlüssel des Quellensystems und die Schlüsselanzeigeinformationen empfängt (102); und
wenn die Schlüsselanzeigeinformationen anzeigen, dass der Schlüssel des Quellensystems ein ursprünglicher Wert ist, der durch ein HLR/AuC direkt erzeugt wurde, der RNC oder der BSC des Multisystem-Funkzugriffsnetzwerks eine Schlüsselumwandlung an dem Schlüssel des Quellensystems ausführt (103), um einen Schlüssel eines Zielsystems zu erhalten,
wobei
wenn das Nutzergerät eine Übergabe von UMTS oder dem TD-SCDMA-System an GSM ausführt, der Schlüssel des Quellensystems, der durch das MSC/VLR des Multisystem-Kernnetzwerks gesendet wurde, ein Chiffrierungsschlüssel, CK, und ein Integritätsschlüssel, IK, ist, und wenn die Schlüsselanzeigeinformationen anzeigen, dass der CK und der IK der ursprüngliche Wert sind, der RNC des Multisystem-Funkzugriffsnetzwerks den CK und den IK in einen Codeschlüssel Kc umwandelt und den Kc an den BSC sendet;
oder
wenn das Nutzergerät eine Übergabe von GSM an UMTS oder an das TD-SCDMA-System ausführt, der Schlüssel des Quellensystems, der von dem MSC/VLR des Multisystem-Kernnetzwerks gesendet wurde, der Kc ist, und wenn die Schlüsselanzeigeinformationen anzeigen, dass der Kc der ursprüngliche Wert ist, der BSC des Multisystem-Funkzugriffsnetzwerks den Kc in den CK und den IK umwandelt und den CK und den IK an den RNC sendet.

2. Verfahren nach Anspruch 1, das ferner umfasst, dass:
wenn die Schlüsselanzeigeinformationen anzeigen, dass der CK und der IK ein berechneter Wert sind, der von dem MSC/VLR umgewandelt wurde, der RNC den Kc, der von dem MSC/VLR umgewandelt wurde, an den BSC sendet; und
wenn die Schlüsselanzeigeinformationen anzeigen, dass der Kc ein berechneter Wert ist, der von dem MSC/VLR umgewandelt wurde, der BSC den CK und den IK, die von dem MSC/VLR umgewandelt wurden, an den RNC sendet.

3. Verfahren nach Anspruch 1, wobei
wenn das MSC/VLR des Multisystem-Kernnetzwerks den CK und den IK und die Schlüsselanzeigeinformationen an den RNC des Multisystem-Funkzugriffsnetzwerks sendet, die Schlüsselanzeigeinformationen in der Form eines Informationselements in Integritätsschutzinformationen und/oder Verschlüsselungsinformationen ausgeführt werden; und
wenn das MSC/VLR des Multisystem-Kernnetzwerks den Kc und die Schlüsselanzeigeinformationen an den BSC des Multisystem-Funkzugriffsnetzwerks sendet, die Schlüsselanzeigeinformationen in der Form eines Informationselements in Verschlüsselungsinformationen und Kc₁₂₈ ausgeführt werden.

4. Verfahren nach Anspruch 1, wobei das Multisystem-Funkzugriffsnetzwerk in der Form mit einem Modus oder in der Form mit mehreren Modi vorliegt.

5. Multisystem-Netzwerk, umfassend:
ein Multisystem-Kernnetzwerk, das ein MSC/VLR und ein HLR/AuC umfasst; und
ein Multisystem-Funkzugriffsnetzwerk, das einen Funknetzwerkcontroller, RNC, und einen Basisstationcontroller, BSC, umfasst,
wobei ein Nutzergerät eine Multisystem-Übergabe zwischen einem Universalen Mobilen Telekommunikationssystem, UMTS, oder einem Time Division-Synchronous Code Division Multiple Access System, TD-SCDMA-System, und einem globalen System für Mobilkommunikationen, GSM, ausführt,
**dadurch gekennzeichnet, dass**
das MSC/VLR des Multisystem-Kernnetzwerks ausgestaltet ist, um einen Schlüssel eines Quellensystems und Schlüsselanzeigeinformationen an den RNC oder den BSC des Multisystem-Funkzugriffsnetzwerks zu senden;
der RNC oder der BSC des Multisystem-Funkzugriffsnetzwerks ausgestaltet ist, um den Schlüssel des Quellensystems und die Schlüsselanzeigeinformationen zu empfangen, und wenn die Schlüsselanzeigeinformationen anzeigen, dass der Schlüssel des Quellensystems ein ursprünglicher Wert ist, der durch das HLR/AuC des Multisystem-Kernnetzwerks direkt erzeugt wurde, eine Schlüsselumwandlung an dem Schlüssel des Quellensystems durchzuführen, um einen Schlüssel des Zielsystems zu erhalten,
wobei sowohl der RNC als auch der BSC ein Empfangsmodul, ein Umwandlungsmodul und ein Weiterleitungsmodul umfassen,
wenn das Nutzergerät eine Übergabe von UMTS oder dem TD-SCDMA-System an GSM durchführt, der Schlüssel des Quellensystems, der von dem MSC/VLR des Multisystem-Kernnetzwerks gesendet wurde, ein Chiffrierungsschlüssel, CK, und ein Integritätsschlüssel IK, ist und das Empfangsmodul des RNC ausgestaltet ist, um den CK und den IK zu empfangen, das Umwandlungsmodul des RNC ausgestaltet ist, um, wenn die Schlüsselanzeigeinformationen anzeigen, dass der CK und der IK der ursprüngliche Wert sind, den CK und den IK in einen Codeschlüssel, Kc, umzuwandeln, und das Weiterleitungsmodul des RNC ausgestaltet ist, um den Kc an das Empfangsmodul des BSC zu senden;
oder
wenn das Nutzergerät eine Übergabe von GSM an UMTS oder das TD-SCDMA-System ausführt, der Schlüssel des Quellensystems, der von dem MSC/VLR des Multisystem-Kernnetzwerks gesendet wurde, der Kc ist, und das Empfangsmodul des BSC ausgestaltet ist, um den Kc zu empfangen; das Umwandlungsmodul des BSC ausgestaltet ist, um, wenn die Schlüsselanzeigeinformationen anzeigen, dass der Kc der ursprüngliche Wert ist, den Kc in den CK und den IK umzuwandeln, und das Weiterleitungsmodul des BSC ausgestaltet ist, um den CK und den IK an das Empfangsmodul des RNC zu senden.

6. Multisystem-Netzwerk nach Anspruch 5, wobei
der RNC ausgestaltet ist, um den Kc, der von dem MSC/VLR umgewandelt wurde, an den BSC zu senden, wenn die Schlüsselanzeigeinformationen anzeigen, dass der CK und der IK ein berechneter Wert ist, der von dem MSC/VLR umgewandelt wurde; und
der BSC ausgestaltet ist, um den CK und den IK, die von dem MSC/VLR umgewandelt wurden, an den RNC zu senden, wenn die Schlüsselanzeigeinformationen anzeigen, dass der Kc ein berechneter Wert ist, der von dem MSC/VLR umgewandelt wurde.

7. Multisystem-Netzwerk nach Anspruch 5, wobei
wenn der CK und der IK und die Schlüsselanzeigeinformationen an den RNC des Multisystem-Funkzugriffsnetzwerks gesendet werden, die Schlüsselanzeigeinformationen in der Form eines Informationselement in Integritätsschutzinformationen und/oder Verschlüsselungsinformationen ausgeführt sind; oder
wenn der Kc und die Schlüsselanzeigeinformationen an den BSC des Multisystem-Funkzugriffsnetzwerks gesendet werden, die Schlüsselanzeigeinformationen in der Form eines Informationselements in den Verschlüsselungsinformationen und Kc₁₂₈ ausgeführt sind.

8. Multisystem-Netzwerk nach Anspruch 5, wobei das Multisystem-Zugriffsnetzwerk in der Form mit einem Modus oder in der Form mit mehreren Modi vorliegt.

## Revendications

1. Procédé pour un réseau coeur multisystème notifiant une clé à un réseau d'accès radio multisystème lorsqu'un équipement utilisateur effectue un transfert multisystème entre un système de télécommunications mobiles universelles, UMTS, ou un système d'accès multiple par répartition en code synchrone et répartition dans le temps, TD-SCDMA, et un système global pour communications mobiles, GSM, le procédé étant **caractérisé en ce qu'**il comprend :
l'envoi (101), par un MSC/VLR du réseau coeur multisystème, d'une clé d'un système source et d'informations d'indication de clé à un contrôleur de réseau radio, RNC, ou à un contrôleur de station de base, BSC, du réseau d'accès radio multisystème ;
la réception (102), par le RNC ou le BSC du réseau d'accès radio multisystème, de la clé du système source et des informations d'indication de clé ; et
si les informations d'indication de clé indiquent que la clé du système source est une valeur d'origine générée directement par un HLR/AuC, le RNC ou le BSC du réseau d'accès radio multisystème effectue (103) une conversion de clé sur la clé du système source pour obtenir une clé d'un système cible,
dans lequel
lorsque l'équipement utilisateur effectue un transfert du système UMTS ou TD-SCDMA vers le système GSM, la clé du système source envoyée par le MSC/VLR du réseau coeur multisystème est une clé de chiffrement, CK, et une clé d'intégrité, IK, et si les informations d'indication de clé indiquent que la CK et la IK sont la valeur d'origine, le RNC du réseau d'accès radio multisystème convertit la CK et la IK en une clé de chiffrement, Kc, et envoie la Kc au BSC ;
ou
lorsque l'équipement utilisateur effectue un transfert du système GSM vers le système UMTS ou TD-SCDMA, la clé du système source envoyée par le MSC/VLR du réseau coeur multisystème est la Kc, et si les informations d'indication de clé indiquent que la Kc est la valeur d'origine, le BSC du réseau d'accès radio multisystème convertit la Kc en la CK et la IK et envoie la CK et la IK au RNC.

2. Procédé selon la revendication 1, comprenant en outre de :
lorsque les informations d'indication de clé indiquent que la CK et la IK sont une valeur calculée convertie par le MSC/VLR, envoyer, par le RNC, la Kc convertie par le MSC/VLR au BSC ; et
lorsque les informations d'indication de clé indiquent que la Kc est une valeur calculée convertie par le MSC/VLR, envoyer, par le BSC, la CK et la IK converties par le MSC/VLR au RNC.

3. Procédé selon la revendication 1, dans lequel
lorsque le MSC/VLR du réseau coeur multisystème envoie la CK et la IK et les informations d'indication de clé au RNC du réseau d'accès radio multisystème, les informations d'indication de clé sont intégrées sous forme d'élément d'information dans des informations de protection d'intégrité et/ou des informations de chiffrement ; et
lorsque le MSC/VLR du réseau coeur multisystème envoie la Kc et les informations d'indication de clé au BSC du réseau d'accès radio multisystème, les informations d'indication de clé sont intégrées sous forme d'élément d'information dans des informations de chiffrement et Kc128.

4. Procédé selon la revendication 1, dans lequel le réseau d'accès radio multisystème est sous une forme monomode ou sous une forme multimode.

5. Réseau multisystème comprenant :
un réseau coeur multisystème comprenant un MSC/VLR et un HLR/AuC ; et
un réseau d'accès radio multisystème comprenant un contrôleur de réseau radio, RNC, et un contrôleur de station de base, BSC,
dans lequel lorsqu'un équipement utilisateur effectue un transfert multisystème entre un système de télécommunications mobiles universelles, UMTS,
ou un système d'accès multiple par répartition en code synchrone et répartition dans le temps, TD-SCDMA, et un système global pour communications mobiles, GSM,
**caractérisé en ce que**
le MSC/VLR du réseau coeur multisystème est configuré pour envoyer une clé d'un système source et des informations d'indication de clé au RNC ou
au BSC du réseau d'accès radio multisystème ;
le RNC ou le BSC du réseau d'accès radio multisystème est configuré pour recevoir la clé du système source et les informations d'indication de clé, et
si les informations d'indication de clé indiquent que la clé du système source est une valeur d'origine générée directement par le HLR/AuC du réseau coeur multisystème, effectuer une conversion de clé sur la clé du système source pour obtenir une clé du système cible,
dans lequel le RNC et le BSC comprennent tous deux un module de réception, un module de conversion et un module de transmission,
lorsque l'équipement utilisateur effectue un transfert du système UMTS ou TD-SCDMA vers le système GSM, la clé du système source envoyée par le MSC/VLR du réseau coeur multisystème est une clé de chiffrement, CK, et une clé d'intégrité, IK, et le module de réception du RNC est configuré pour recevoir la CK et la IK, le module de conversion du RNC est configuré pour, si les informations d'indication de clé indiquent que la CK et la IK sont la valeur d'origine, convertir la CK et la IK en une clé de chiffrement, Kc, et le module de transmission du RNC est configuré pour envoyer la Kc au module de réception du BSC ;
ou
lorsque l'équipement utilisateur effectue un transfert du système GSM vers le système UMTS ou TD-SCDMA, la clé du système source envoyée par le MSC/VLR du réseau coeur multisystème est la Kc, et le module de réception du BSC est configuré pour recevoir la Kc ; le module de conversion du BSC est configuré pour, si les informations d'indication de clé indiquent que la Kc est la valeur d'origine, convertir la Kc en la CK et la IK, et le module de transmission du BSC est configuré pour envoyer la CK et la IK au module de réception du RNC.

6. Réseau multisystème selon la revendication 5, dans lequel le RNC est configuré pour envoyer la Kc convertie par le MSC/VLR au BSC si les informations d'indication de clé indiquent que la CK et la IK sont une valeur calculée convertie par le MSC/VLR ; et
le BSC est configuré pour envoyer la CK et la IK converties par le MSC/VLR au RNC si les informations d'indication de clé indiquent que la Kc est une valeur calculée convertie par le MSC/VLR.

7. Réseau multisystème selon la revendication 5, dans lequel lorsque la CK et la IK et les informations d'indication de clé sont envoyées au RNC du réseau d'accès radio multisystème, les informations d'indication de clé sont intégrées sous la forme d'un élément d'information dans des informations de protection d'intégrité et/ou des informations de chiffrement ; ou
lorsque la Kc et les informations d'indication de clé sont envoyées au BSC du réseau d'accès radio multisystème, les informations d'indication de clé sont intégrées sous la forme d'un élément d'information dans les informations de chiffrement et Kc128.

8. Réseau multisystème selon la revendication 5, dans lequel le réseau d'accès radio multisystème est sous une forme monomode ou sous une forme multimode.
